# EUROPEAN PATENT APPLICATION

(11) **EP 4 245 194 A1**
(43) Date of publication of application: **20.09.2023**
(21) Application number: 21924271.6
(22) Date of filing: 28.10.2021
(51) Int. Cl.: A47J 27/04, A47J 36/00, A47J 37/06

(54) **STEAM GENERATOR CONTROL METHOD AND DEVICE, STEAM GENERATOR AND STEAM OVEN**

(30) Priority: 07.02.2021 CN 202110181490
(71) Applicant: Gree Electric Appliances, Inc. of Zhuhai, Zhuhai City, Guangdong 519070 (CN)
(72) Inventor: MAI, ZhiWen, Zhuhai, Guangdong 519070 (CN); LIU, Min, Zhuhai, Guangdong 519070 (CN); CHEN, Yongjun, Zhuhai, Guangdong 519070 (CN); LIN, Zhangpeng, Zhuhai, Guangdong 519070 (CN)
(74) Representative: Zacco GmbH
(86) International application number: PCT/CN2021/127086
(87) International publication number: WO 2022/166275

(57) **Abstract**

Some embodiments of the present invention provideThe present disclosure provides a method and apparatus for controlling a steam generator, a steam generator and a steam oven. The method for controlling a steam generator includes: acquiring a target operating temperature of the steam generator; acquiring a current operating temperature of the steam generator according to a preset time period; determining an operating duration of the water pump in a next preset time period according to a relationship between the current operating temperature and the target operating temperature; and controlling the water pump to supplement water for the steam generator based on the operating duration in the next preset time period, and thus by periodically detecting the current operating temperature of the steam generator, and adjusting the operating duration of the water pump in a next period according to a relationship between the current operating temperature and the target operating temperature, the water supplementing amount is adjusted by means of such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying use requirements, thereby improving the use experience of the users.

## Description

### Technical Field

The invention relates to a technical field of household appliances, and specifically relates to a method and apparatus for controlling a steam generator, a steam generator and a steam oven.

### Background

In the art known to inventors, most of the steam ovens comprise water storage-type steam generators, the control method thereof is simple, but the steam efficiency thereof is low, steam generated thereby is saturated steam, and the humidity of the steam is relatively high; and if the steam is used for cooking, the problems of poor food taste and difficulty in removing condensate water exist, thereby affecting the use experience of users.

With regard to the problems, an instant-heating steam generator emerged, the instant-heating steam generator can quickly output steam, and the steam generated thereby is superheated steam, and the humidity of the steam is low; if the steam is used for cooking, less condensate water is generated, the food taste is good, and the user experience is good, while the water consumption amount is also low. Therefore, the instant-heating steam generator is very suitable for being applied to a cooking device using steam for cooking.

However, the temperature of the instant-heating steam generator itself easily fluctuates, and temperature fed back by a temperature sensing bulb of the steam generator has a certain delay, and thus the situation of too much water supplemented easily occurs, the operating temperature of the steam generator is reduced, which further causes the problem that inlet water cannot evaporate in time and an outlet of the steam generator sprays water, thereby affecting the cooking effect. Therefore, how to control the instant-heating steam generator to continuously generate steam satisfying cooking requirements becomes a new challenge.

### Summary

Some embodiments of the present invention provide a method and apparatus for controlling a steam generator, a steam generator, and a cooking device, so as to overcome the problems in the art known to inventors that the temperature of an instant-heating steam generator itself easily fluctuates, and temperature fed back by a temperature sensing bulb of the steam generator has a certain delay, the situation of inaccurate water supplementing easily occurs, which further renders that inlet water cannot evaporate in time and an outlet of the steam generator sprays water.

In order to solve the above problem, embodiments of the present invention provide a method for controlling a steam generator, wherein a water inlet pipeline of the steam generator is connected with a water pump, and the water pump supplements water for the steam generator, and the method includes:
acquiring a target operating temperature of the steam generator;
acquiring a current operating temperature of the steam generator according to a preset time period;
determining an operating duration of the water pump in a next preset time period according to a relationship between the current operating temperature and the target operating temperature; and
controlling the water pump to supplement water for the steam generator based on the operating duration in the next preset time period.

In some embodiments, determining an operating duration of the water pump in a next preset time period according to a relationship between the current operating temperature and the target operating temperature includes:
calculating a temperature difference between the current operating temperature and the target operating temperature; and
calculating the operating duration on the basis of the temperature difference and a preset PID control algorithm.

In some embodiments, determining an operating duration of the water pump in a next preset time period according to a relationship between the current operating temperature and the target operating temperature includes:
calculating a temperature difference between the current operating temperature and the target operating temperature; and
calculating the operating duration on the basis of the temperature difference and a relationship between a preset temperature and the operating duration.

In some embodiments, controlling the water pump to supplement water for the steam generator based on the operating duration in the next preset time period includes:
determining an operating duty cycle of the water pump on the basis of a relationship between the preset time period and the operating duration; and
controlling the water pump to perform pulsed water supplementing based on the operating duty cycle in the next preset time period.

In some embodiments, before determining an operating duration of the water pump in a next preset time period according to a relationship between the current operating temperature and the target operating temperature, the method further includes:
determining whether the steam generator operates for the first time after being powered on;
if the steam generator operates for the first time after being powered on, determining whether the current operating temperature reaches a first preset temperature, wherein the first preset temperature is less than the target operating temperature; and
if the current operating temperature reaches a first preset temperature, turning on the water pump to start pumping water, until the current operating temperature reaches the target operating temperature.

In some embodiments, the method further includes:
determining whether the current operating temperature is greater than a second preset temperature, wherein the second preset temperature is greater than the target operating temperature; and
if the current operating temperature is greater than the second preset temperature, controlling the steam generator to stop operating.

Some embodiments of the present invention further provide an apparatus for controlling a steam evaporator, wherein a water inlet pipeline of the steam generator is connected with a water pump, and the water pump supplements water for the steam generator, and the apparatus includes:
an acquisition module, configured to acquire a target operating temperature of the steam generator;
a first processing module, configured to acquire a current operating temperature of the steam generator according to a preset time period;
a second processing module, configured to determine an operating duration of the water pump in a next preset time period according to a relationship between the current operating temperature and the target operating temperature; and
a third processing module, configured to control the water pump to supplement water for the steam generator based on the operating duration in the next preset time period.

Some embodiments of the present invention further provide a steam generator, wherein the steam generator includes:
a memory and a processor, wherein the memory and the processor are in communication connection with each other, the memory stores a computer instruction, and the processor executes the above method for controlling a steam generator by executing the computer instruction.

Some embodiments of the present invention further provide a steam oven, wherein the steam oven includes: the above steam generator.

Some embodiments of the present invention further provide a computer-readable storage medium, the computer-readable storage medium storing a computer instruction, wherein the computer instruction is used to enable the computer to execute the above method for controlling a steam generator.

The technical solutions of some embodiments of the present invention have the following advantages:
Applying the technical solution of this invention, by acquiring a target operating temperature of a steam generator; acquiring a current operating temperature of the steam generator according to a preset time period; determining an operating duration of a water pump in a next preset time period according to a relationship between the current operating temperature and the target operating temperature; and controlling the water pump to supplement water for the steam generator based on the operating duration in the next preset time period; and thus by periodically detecting the current operating temperature of the steam generator, and adjusting the operating duration of the water pump in a next period according to a relationship between the current operating temperature and the target operating temperature, and controlling the water pump to supplement water for the steam generator based on the operating duration in the next period, the water supplementing amount is adjusted by means of such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying use requirements, thereby improving the use experience of the users.

The steam oven provided in embodiments of the present invention includes the steam generator provided by some other embodiments of the present invention. The water supplementing amount of the steam generator is adjusted by using such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying cooking requirements and ensures the taste of cooking food ingredients, thereby improving the use experience of the users.

### Brief Description of the Drawings

In order to describe the technical solutions in specific embodiments of the present invention or in the related art more clearly, hereinafter, accompanying drawings requiring to be used for describing the specific embodiments or the related art are introduced briefly. Apparently, the accompanying drawings in the following description merely relate to some embodiments of the present invention, and for a person of ordinary skill in the art, other accompanying drawings can also be derived from these accompanying drawings without involving any inventive effort.
Fig. 1 illustrates a schematic structural diagram of a steam oven according to embodiments of this invention;
Fig. 2 illustrates a flowchart of a method for controlling a steam generator according to embodiments of this invention;
Fig. 3 illustrates a schematic diagram of a process for controlling a steam generator according to embodiments of this invention;
Fig. 4 illustrates a schematic structural diagram of an apparatus for controlling a steam generator according to embodiments of this invention; and
Fig. 5 illustrates a schematic structural diagram of a steam generator according to embodiments of this invention.

### Detailed Description of the Embodiments

In order to make objects, technical solutions and advantages of embodiments of this invention clearer, hereinafter, the technical solutions in the embodiments of this invention will be clearly and completely described in combination with the accompanying drawings in the embodiments of the present invention. Obviously, the embodiments as described are only some rather than all the embodiments of this invention. All other embodiments obtained by a person skilled in the art on the basis of the embodiments of this invention without involving any inventive effort shall all fall within the scope of protection of this invention.

The technical features involved in different embodiments of this invention as described below can be combined with each other as long as they do not conflict with each other.

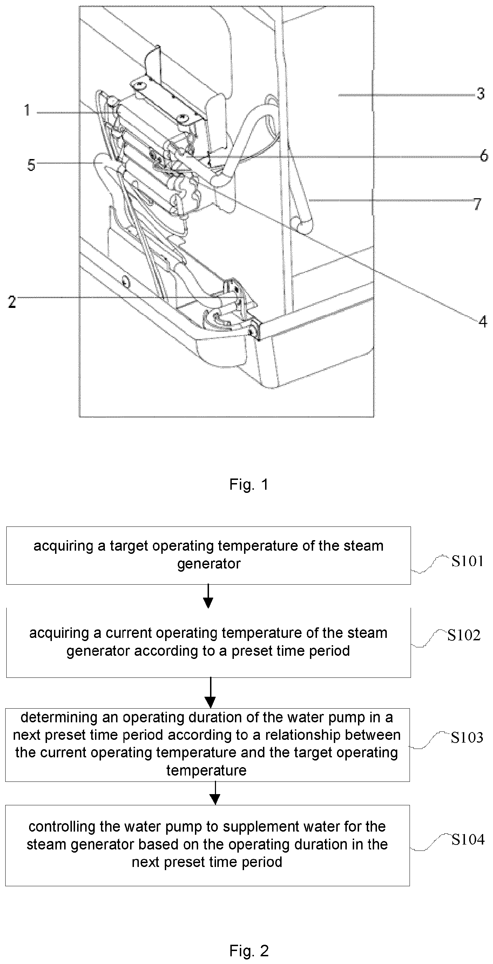

Some embodiments of this invention provide a method for controlling a steam generator, which is applied to a controller of a steam oven as shown in Fig. 1, the steam oven includes a steam generator 1, a water pump 2, an inner container 3 and a temperature sensing bulb 4 which is disposed on the steam generator 1, wherein a water inlet pipeline 5 of the steam generator 1 is connected with the water pump 2 and supplements water for the steam generator 1 by means of the water pump 2; a steam outlet 6 of the steam generator 1 is connected with the inner container 3 of the steam oven through a steam outlet pipeline 7 and is configured to input superheated steam into the inner container 3 for cooking food ingredients; the temperature sensing bulb 4 is configured to collect an operating temperature signal of the steam generator 1 and send the temperature signal to the controller (not shown in Fig. 1) of the steam oven.

As shown in Fig. 2, a method for controlling a steam generator provided according to embodiments of the present invention mainly includes the following steps:
Step S101: acquiring a target operating temperature of the steam generator.

The target operating temperature is an optimal temperature when the steam generator provided in the oven generates superheated steam required to satisfy cooking requirements of the steam oven, and specifically can be flexibly adjusted according to different steam oven products and user's cooking requirements. In embodiments of the present invention, the target operating temperature being 140°C is taken as an example for illustration, and it is merely taken as an example, but the present invention is not limited thereto.

Step S102: acquiring a current operating temperature of the steam generator according to a preset time period.

The current operating temperature can be obtained by the temperature signal sent by the temperature sensing bulb disposed on the steam generator; and the preset time period is a minimum adjustment unit for the steam generator in the steam oven, and specifically can be set according to the control precision requirement of the steam generator in the steam oven. The higher the control precision requirement, the shorter the corresponding preset time period; otherwise, the lower the control precision requirement, the longer the corresponding preset time period.

Step S103: determining an operating duration of the water pump in a next preset time period according to a relationship between the current operating temperature and the target operating temperature.

The operating duration is a total duration in which the water pump supplements water for the steam generator in a next preset time period, and thus water supplement control on the steam generator can be periodically performed, excessive water supplementing at one time is avoided, and also it is ensured that the steam generator can continuously generate superheated steam satisfying requirements.

Step S104: controlling the water pump to supplement water for the steam generator based on the operating duration in the next preset time period.

How the water pump operates in the next preset time period can be flexibly adjusted according to actual requirements, as long as it can be ensured that the total operating time of the water pump in the preset time period reaches the described operating duration. For example, at the start of the preset time period, the water pump is directly controlled to operate until the operating duration is reached; or at the start of the preset time period, the water pump is not turned on to operate, and when the remaining time of the preset time period is equal to the operating duration, the water pump is controlled to start to operate until the preset time period ends, etc., but the present invention is not limited thereto.

By executing the described steps, in the method for controlling a steam generator provided in embodiments of the present invention, by periodically detecting the current operating temperature of the steam generator, and adjusting the operating duration of the water pump in a next preset time period according to a relationship between the current operating temperature and the target operating temperature, and controlling the water pump to supplement water for the steam generator based on the operating duration in the next period, the water supplementing amount is adjusted by means of such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying use requirements, thereby improving the use experience of the users.

In some embodiments, Step S103 specifically includes the following steps:
Step S201: calculating a temperature difference between the current operating temperature and the target operating temperature; and
Step S202: calculating the operating duration on the basis of the temperature difference and a preset PID control algorithm.

In some embodiments, the steam generator can continuously output superheated steam satisfying the requirements of the steam oven when the temperature is about 140°C; and if the steam generator lacks water, a sufficient amount of superheated steam cannot be generated, and meanwhile, the temperature of the steam generator will also increase, and therefore water needs to be supplemented by the water pump. In order to improve the precision of water supplementing of the steam generator, in the embodiments of the present invention, the operating temperature of temperature evaporator is taken as a control target by using a preset PID algorithm, and a temperature difference is used to calculate the operating duration of the water pump, so as to always keep the temperature of the evaporator in the range of the target operating temperature, thereby further improving the precision of water supplementing of the steam evaporator. The range of the target operating temperature refers to a temperature range near the target operating temperature; and the steam generator operates in this temperature range, and can continuously output superheated steam satisfying the requirements of the steam oven. The temperature range can be set according to actual operating situations of the steam oven, and in the embodiments of the present invention, the range of the target operating temperature is 130°C; in other embodiments of this invention, the range of the target operating temperature is 150°C, and it is merely taken as an example, but the present invention is not limited thereto.

In some embodiments, Step S103 includes the following steps:
Step S301: calculating a temperature difference between the current operating temperature and the target operating temperature; and
Step S302: calculating the operating duration on the basis of the temperature difference and a relationship between a preset temperature and the operating duration.

The relationship between the preset temperature and the operating duration is obtained by using an artificial intelligence analysis method according to historical operating data of the steam oven. The relationship between the preset temperature and the operating duration is water supplementing time required by the water pump in the next preset time period correspondingly when the current operating temperature increases by 1°C compared with the target operating temperature; and then the water supplementing amount required in the next preset time period can be precisely determined, to avoid the problem of excessive water supplementing at one time causes water spraying at a steam outlet of the steam generator, facilitating maintenance of stable operating temperature of the steam generator, so as to continuously generate high-quality excessive steam, thereby further improving the use experience of users.

In some embodiments, Step S104 includes the following steps:
Step S401: determining an operating duty cycle of the water pump on the basis of a relationship between the preset time period and the operating duration; and
Step S402: controlling the water pump to perform pulsed water supplementing based on the operating duty cycle in the next preset time period.

In actual applications, if water is continuously supplemented to the water pump within a certain period of time, the temperature of the steam generator will decrease rapidly; because of temperature sensing of the temperature sensing bulb on the steam generator has a delay, the change of the steam generator cannot be sensed rapidly, resulting in that the water pump supplements too much water, the temperature of the steam generator is low, and the heat is insufficient to evaporate too much water, causing a water spraying situation at the steam outlet of the steam generator, leading to poor cooking effect. Therefore, in the embodiments of this invention, in order to further improve the water supplementing precision of the water pump and to avoid the problem that the temperature of the steam generator drops sharply due to too much water supplementing, the operating duty cycle of the water pump is determined by calculating the ratio of the operating duration of the water pump to the preset time period, and in the next preset period, according to the operating duty cycle, the water pump is controlled to perform pulsed water supplementing. Assuming that the operating duration of the water pump is 50 ms, and the preset time period is 250 ms, then the operating duty cycle is 1:5, and the water pump can be controlled to stop for 40 ms for every 10 ms of operation in the next preset period; the specific time of each operating period can be set according to actual requirements. In the embodiments of the present invention, an operating cycle of 50 ms is taken as an example, but the present invention is not limited thereto. It should be noted that in actual applications, the operating of the water pump can also be controlled in a manner of a fixed operating duty cycle. If a fixed operating duty cycle is 1:2 and one operating period is still 50 ms, then the water pump can be controlled to operate for 25 ms and stop for 25 ms in a next preset period, until the total operating time reaches the operating duration of the water pump in the preset time period, and the present invention is not limited thereto.

By the pulsed water supplementing manner of the water pump, the instant water supplementing amount of the water pump is reduced, so that the water supplementing amount at one time will not be excessive; and the original water supplementing amount at one time is divided into water supplementing in multiple duty cycles, thereby solving the problems that the temperature of the steam generator rapidly decreases due to excessive water supplementing amount at one time, and the temperature sensing bulb of the steam generator delays. In addition, in practical applications, the instant water supplementing amount of the water pump can be reduced by decreasing the rotational speed of the water pump; and the manner of reducing the rotational speed of the water pump and the pulsed water supplementing manner can also be used in combination and adjusted adaptively, so as to achieve a more ideal water supplementing effect, which will not be repeated herein.

In some embodiments, before executing step S103, the method for controlling a steam generator further includes the following steps:
Step S105: determining whether the steam generator operates for a first time after being powered on;
Step S106: if the steam generator operates for the first time after being powered on, determining whether the current operating temperature reaches a first preset temperature,
   wherein the first preset temperature is less than the target operating temperature, and the first preset temperature can be set according to actual operating requirements of the steam generator, and in the embodiments of the present invention, the first preset temperature is 135°C, and it is merely taken as an example, but the present invention is not limited thereto; and
Step S107: if the current operating temperature reaches the first preset temperature, turning on the water pump to start pumping water, until the current operating temperature reaches the target operating temperature.

In some embodiments, when the steam generator is powered on and operates for the first time, in order to avoid a water-free state in the pipeline, before water enters the steam generator, water must fill the water inlet pipeline first; because of there will be a certain delay when the water enters the steam generator. If water inlet is not timely, the steam generator is easily damaged due to an excessively high temperature; and if water inlet is too early, the steam generator has not reached the target operating temperature yet, water spraying at the steam outlet easily occurs, or the current operating temperature of the steam generator will be reduced, and the target operating temperature cannot be reached, which is adverse to the generation of superheated steam. Therefore, in the embodiments of the present invention, before the steam generator is controlled, it is first determined whether the steam generator operates for the first time after being powered on; if the steam generator operates for the first time, when the current operating temperature of the steam generator reaches 135°C, i.e. near the target operating temperature, the water pump is controlled to feed water. Thus, by precisely controlling the time for the water pump to feed water in advance, damage of the steam generator caused by too high temperature is avoided, and also the problem that the steam outlet sprays water due to the decrease of the operating temperature of the steam generator is avoided, facilitating maintenance of stable operation of the steam generator; and high-quality superheated steam is continuously outputted to the inner container of the steam oven for cooking, so as to ensure the taste of cooking food ingredients, thereby improving the use experience of users.

In some embodiments, the method for controlling a steam generator further includes the following steps:
Step S108: determining whether the current operating temperature is greater than a second preset temperature,
   wherein the second preset temperature is greater than the target operating temperature; specifically, the second preset temperature can be set according to operating requirements of the steam generator, and in the embodiments of the present invention, the second preset temperature is 200°C, and it is merely taken as an example, but the present invention is not limited thereto; and
Step S109: if the current operating temperature is greater than the second preset temperature, controlling the steam generator to stop operating.

In some embodiments, in order to avoid the problem of abnormal dry-burning of the steam generator, upon detection that the current operating temperature of the steam generator is greater than 200°C, the steam generator is automatically controlled to stop operating. Correspondingly, fault information can be prompted to the user in the form of a voice or an indicator light, to remind the user in time to perform corresponding repair on the steam oven, thereby prolonging the service life of the steam generator and the steam oven.

Hereinafter, the method for controlling a steam generator provided according to embodiments of the present invention will be described in detail with reference to a specific application example.

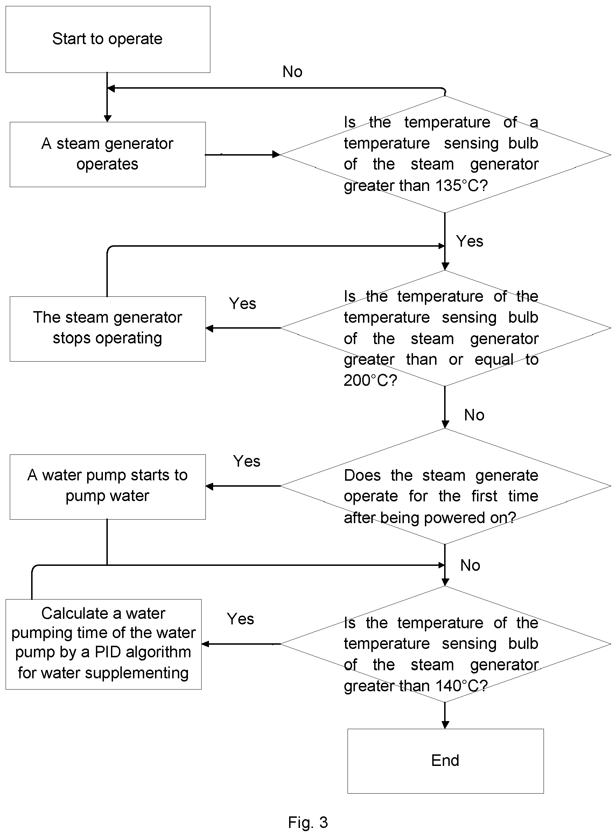

Fig. 3 is a schematic diagram of a specific control process of a steam generator. When the steam oven starts to be powered on and operates, the steam generator always maintains an operating state, the water pump provides a water source to the steam generator, and the water quickly forms steam under a high temperature of the steam generator and the steam is discharged from an outlet of the steam generator into the inner container of the oven for cooking by the steam generator. When the temperature of the temperature sensing bulb of the steam generator is greater than 135°C, at this time, it is determined whether the steam oven operates for the first time after being powered on, and if the steam oven operates for the first time currently, in order to avoid a water-free state in the pipeline, the water pump enters an operating state in advance, thereby avoiding a delay in water inlet. When the temperature of the temperature sensing bulb of the steam generator is greater than 140°C, a controller calculates, by using a PID algorithm, the operating time during which the water pump needs to supplement water in the next time period, and always keeps the operating temperature of the steam generator within the range of 140°C±10°C, so as to continuously output superheated steam. Moreover, in order to avoid a problem of abnormal dry-burning of the steam generator, when the temperature of the temperature sensing bulb of the steam generator is ≥200°C, the steam generator is controlled to stop operating.

Thus, the present invention ensures that the steam generator can continuously and stably operate to output superheated steam, solves the problems of inaccurate water supplementing and water spraying at the outlet of the steam generator due to delay of the temperature fed back by the temperature sensing bulb of the steam generator, and ensures that the humidity of the superheated steam is low, reduces condensate water in the inner container, ensures the taste of cooking food ingredients, and improves the user experience.

By executing the described steps, in the method for controlling a steam generator provided in embodiments of the present invention, by periodically detecting the current operating temperature of the steam generator, and adjusting the operating duration of the water pump in a next period according to a relationship between the current operating temperature and the target operating temperature, and controlling, according to the operating duration, the water pump to supplement water for the steam generator in the next period, the water supplementing amount is adjusted by means of such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying use requirements, thereby improving the use experience of the users.

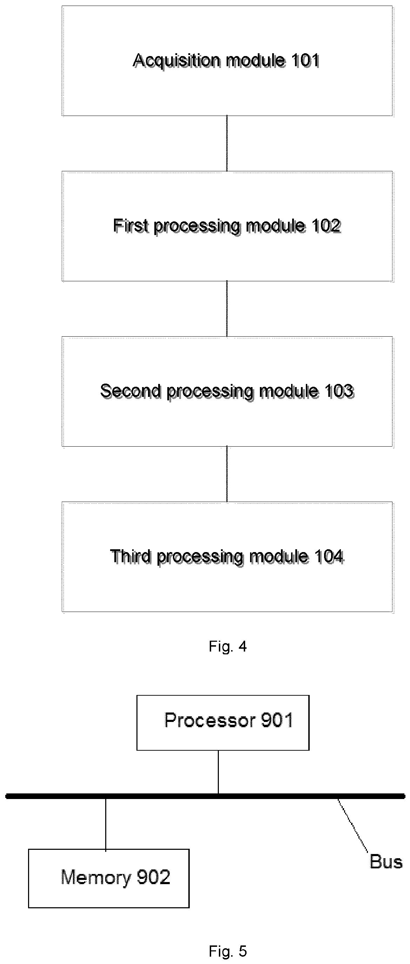

Embodiments of the present invention further provide an apparatus for controlling a steam evaporator, which is applied to the controller of the steam oven as shown in Fig. 1. As shown in Fig. 4, the apparatus for controlling a steam evaporator includes:
a first acquisition module 101, configured to acquire a target operating temperature of the steam generator; for detailed content, reference can be made to the related description of step S101 above, and details will not be repeated herein;
a first processing module 102, configured to acquire a current operating temperature of the steam generator according to a preset time period; for detailed content, reference can be made to the related description of step S102 above, and details will not be repeated herein;
a second processing module 103, configured to determine an operating duration of the water pump in a next preset time period according to a relationship between the current operating temperature and the target operating temperature; for detailed content, reference can be made to the related description of step S103 above, and details will not be repeated herein; and
a third processing module 104, configured to control the water pump to supplement water for the steam generator based on the operating duration in the next preset time period; for detailed content, reference can be made to the related description of step S104 above, and details will not be repeated herein.

The apparatus for controlling a steam evaporator provided in the embodiments of the present invention is used for executing the method for controlling a steam evaporator provided in the embodiments above, and the implementations and principles thereof are the same as those in said method. For detailed content, reference can be made to the relevant description of the described method embodiments, and the description thereof will not be repeated.

By collaboration of various constituent parts above, in the apparatus for controlling a steam generator provided in the embodiments of the present invention, by periodically detecting the current operating temperature of the steam generator, and adjusting the operating duration of the water pump in a next period according to a relationship between the current operating temperature and the target operating temperature, and controlling, according to the operating duration, the water pump to supplement water for the steam generator in the next period, the water supplementing amount is adjusted by means of such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying use requirements, thereby improving the use experience of the users.

Embodiments of the present invention further provide a steam generator. As shown in Fig. 5, the steam generator includes: a processor 901 and a memory 902; wherein the processor 901 and the memory 902 can be connected by means of a bus or in other manners. In Fig. 5, the processor and the memory being connected by a bus is taken as an example.

In some embodiments, the processor 901 can be a central processing unit (CPU). The processor 901 can also be a chip such as another general processor, a digital signal processor (DSP), an application specific integrated circuit (ASIC), a field-programmable gate array (FPGA), or other programmable logic devices, a discrete gate or transistor logic device, or a discrete hardware component, etc., or a combination of the various chips above.

In some embodiments, the memory 902, as a non-transitory computer-readable storage medium, can be configured to store a non-transitory software program, a non-transitory computer-executable program, and modules, such as program instructions/modules corresponding to the above method for controlling a steam generator. The processor 901 executes various functional applications and data processing of the processor by running the non-transitory software program, instructions and modules which are stored in the memory 902, so as to implement the above method for controlling a steam generator.

In some embodiments, the memory 902 can include a program storage region and a data storage region, wherein the program storage region can store an operating system and an application program required by at least one function; and the data storage region can store data created by the processor 901, etc. In addition, the memory 902 can comprise a high-speed random access memory, and can further include a non-transitory memory, for example, at least one magnetic disk storage device, a flash memory device, or other non-transitory solid-state storage devices. In some embodiments, the memory 902 optionally includes a memory which is remotely arranged relative to processor 901, and these remote memories can be connected to the processor 901 via a network. Examples of the network include, but are not limited to the Internet, an intranet, a local area network, a mobile communication network and a combination thereof.

In some embodiments, one or more modules are stored in the memory 902, and when executed by the processor 901, the modules execute the method in the above method for controlling a steam generator.

Specific details of the steam generator can be understood with reference to corresponding related descriptions and effects in the above method for controlling a steam generator, and they will not be repeated herein.

A person skilled in the art could understand that all or a part of the processes of the above method for controlling a steam generator can be implemented by a computer program instructing relevant hardware. The implemented program can be stored in a computer-readable storage medium. When the program is executed, the processes of the method embodiments above can be included. The storage medium can be a magnetic disk, an optical disk, a read-only memory (ROM), a random access memory (RAM), a flash memory, a hard disk drive (abbreviated as HDD) or a solid-state drive (SSD), etc.; and the storage medium can also comprise a combination of memories of the described types.

Embodiments of the present invention further provide a steam oven. As shown in Fig. 1, a steam generator of the steam oven is the steam generator as shown in Fig. 5.

In some embodiments, the water supplementing amount of the steam generator is adjusted by using such a periodic control manner, and more accurate water supplementing is provided for the steam generator, avoiding the problems that inlet water cannot evaporate in time due to an excessive water supplementing amount at one time and an outlet of the steam generator sprays water, which continuously provides users with steam satisfying cooking requirements and ensures the taste of cooking food ingredients, thereby improving the use experience of the users.

Although the embodiments of the present invention are described in combination with the accompanying drawings, various modifications and variations can be made by a person skilled in the art without departing from the spirit and scope of the present invention, and all such modifications and variations fall within the scope as defined by the appended claims.

## Claims

1. A method for controlling a steam generator, wherein a water inlet pipeline of the steam generator is connected with a water pump, and the water pump supplements water for the steam generator, and the method comprises:
acquiring a target operating temperature of the steam generator;
acquiring a current operating temperature of the steam generator according to a preset time period;
determining an operating duration of the water pump in a next preset time period according to a relationship between the current operating temperature and the target operating temperature; and
controlling the water pump to supplement water for the steam generator based on the operating duration in the next preset time period.

2. The method as claimed in claim 1, wherein determining an operating duration of the water pump in a next preset time period according to a relationship between the current operating temperature and the target operating temperature comprises:
calculating a temperature difference between the current operating temperature and the target operating temperature; and
calculating the operating duration on the basis of the temperature difference and a preset PID control algorithm.

3. The method as claimed in claim 1, wherein determining an operating duration of the water pump in a next preset time period according to a relationship between the current operating temperature and the target operating temperature comprises:
calculating a temperature difference between the current operating temperature and the target operating temperature; and
calculating the operating duration on the basis of the temperature difference and a relationship between a preset temperature and the operating duration.

4. The method as claimed in claim 1, wherein controlling the water pump to supplement water for the steam generator based on the operating duration in the next preset time period comprises:
determining an operating duty cycle of the water pump on the basis of a relationship between the preset time period and the operating duration; and
controlling the water pump to perform pulsed water supplementing based on the operating duty cycle in the next preset time period.

5. The method as claimed in claim 1, wherein before determining an operating duration of the water pump in a next preset time period according to a relationship between the current operating temperature and the target operating temperature, the method further comprises:
determining whether the steam generator operates for a first time after being powered on;
if the steam generator operates for the first time after being powered on, determining whether the current operating temperature reaches a first preset temperature, wherein the first preset temperature is less than the target operating temperature; and
if the current operating temperature reaches the first preset temperature, turning on the water pump to start pumping water, until the current operating temperature reaches the target operating temperature.

6. The method as claimed in claim 1, wherein the method further comprises:
determining whether the current operating temperature is greater than a second preset temperature, wherein the second preset temperature is greater than the target operating temperature; and
if the current operating temperature is greater than the second preset temperature, controlling the steam generator to stop operating.

7. An apparatus for controlling a steam evaporator, wherein a water inlet pipeline of the steam generator is connected with a water pump, and the water pump supplements water for the steam generator, and the apparatus comprises:
an acquisition module, configured to acquire a target operating temperature of the steam generator;
a first processing module, configured to acquire a current operating temperature of the steam generator according to a preset time period;
a second processing module, configured to determine an operating duration of the water pump in a next preset time period according to a relationship between the current operating temperature and the target operating temperature; and
a third processing module, configured to control the water pump to supplement water for the steam generator based on the operating duration in the next preset time period.

8. A steam generator, wherein the steam generator comprises:
a memory and a processor, wherein the memory and the processor are in communication connection with each other, the memory stores computer instruction, and the processor executes the method as claimed in any one of claims 1 to 6 by executing the computer instruction.

9. A steam oven, wherein the steam oven comprises the steam generator as claimed in claim 8.

10. A computer-readable storage medium, wherein the computer-readable storage medium stores a computer instruction, and the computer instruction is used to enable the computer to execute the method as claimed in any one of claims 1 to 6.
